# EUROPEAN PATENT SPECIFICATION

(11) **EP 4 425 151 B1**
(45) Date of publication and mention of the grant of the patent: **25.11.2026**
(21) Application number: 24160509.6
(22) Date of filing: 29.02.2024
(51) Int. Cl.: G01N 21/41, G01N 11/00, G01N 21/03, G01N 21/17

(54) **VISCOMETER COMPRISING OPTO CHIP AND DETECTION METHODS**
VISKOSIMETER MIT OPTOCHIP UND DETEKTIONSVERFAHREN
VISCOSIMÈTRE COMPRENANT UNE PUCE OPTIQUE ET PROCÉDÉS DE DÉTECTION

(30) Priority: 01.03.2023 CN 202310187055
(43) Date of publication of application: 04.09.2024
(73) Proprietor: Versitech Limited, Pokfulam, Hong Kong (HK); Southern University of Science and Technology, Shenzhen, Guangdong 518055 (CN)
(72) Inventor: CHU, Zhiqin, Pokfulam (HK); LI, Kwai Hei, Shenzhen (CN); LUO, Yumeng, Shenzhen (CN)
(74) Representative: HGF

(56) References cited:
- US-A1- 2023 003 644
- YANG HONGYING ET AL: "Viscosity Sensors Based on III-Nitride Optical Devices Integrated With Droplet Sliding Channels", IEEE ELECTRON DEVICE LETTERS, IEEE, USA, vol. 43, no. 12, 14 October 2022 (2022-10-14), pages 2169 - 2172, XP011928594, ISSN: 0741-3106, [retrieved on 20221129], DOI: 10.1109/LED.2022.3214830
- LU GAOFEI ET AL: "Droplet Microsensors Based on GaN Diode Optopairs", 2022 ASIA COMMUNICATIONS AND PHOTONICS CONFERENCE (ACP), IEEE, 5 November 2022 (2022-11-05), pages 1970 - 1973, XP034327579, DOI: 10.1109/ACP55869.2022.10088713
- NGUYEN THANH-VINH ET AL: "MEMS-based pressure sensor with a superoleophobic membrane for measuring droplet vibration", 2017 19TH INTERNATIONAL CONFERENCE ON SOLID-STATE SENSORS, ACTUATORS AND MICROSYSTEMS (TRANSDUCERS), IEEE, 18 June 2017 (2017-06-18), pages 1152 - 1155, XP033130964, DOI: 10.1109/TRANSDUCERS.2017.7994257
- NGUYEN THANH-VINH ET AL: "Viscosity measurement based on the tapping-induced free vibration of sessile droplets using MEMS-based piezoresistive cantilevers", LAB ON A CHIP, vol. 15, no. 18, 27 July 2015 (2015-07-27), UK, pages 3670 - 3676, XP093178704, ISSN: 1473-0197, DOI: 10.1039/C5LC00661A
- SINGH PARUL ET AL: "A comprehensive review on MEMS-based viscometers", SENSORS AND ACTUATORS A: PHYSICAL, ELSEVIER BV, NL, vol. 338, 22 February 2022 (2022-02-22), XP087011512, ISSN: 0924-4247, [retrieved on 20220222], DOI: 10.1016/J.SNA.2022.113456

## Description

### Technical field

The invention belongs to the field of detection equipment, and specifically relates to a viscometer comprising an opto chip for detecting the physical parameters of a liquid sample, and detection methods using the viscometer

### Background Art

Viscosity is one of the important physical properties of liquids. Viscosity measurement is an indispensable task in many practical applications. For example, in industries, like food manufacturing and product production, viscosity monitoring is often used to control the impregnation and coating process of fluids to improve product quality. Furthermore, viscosity measurement plays important role in biomedical and clinical applications, such as blood viscosity for the detection of cardiovascular diseases. The characterization of antibody solutions and protein-based drugs, as well as for DNA analysis, also rely on viscosity.

Many techniques have been developed to meet the needs of viscosity measurement, including the capillary method, falling ball method, vibration method, rotation method, plate method and so on.

The capillary method is widely used due to its simplicity and practicality, resulting in a variety of current measuring devices being designed based on this method. The capillary method utilizes external pressure to drive a fluid flow through a capillary tube. The pressure difference between the two ends of the tube and the flow rate of the fluid are measured, corrected, and then used to calculate the viscosity of the fluid according to the Hagen-Poiseuille Equation. However, there are several challenges associated with the current devices based on the capillary method for measuring viscosity, including: (1) the requirement for a calibrated reference; (2) the difficulty in accurately measuring pressure difference and flow rate; (3) the need for a significant amount of experimental liquid (with the inner diameter of the capillary typically being in the order of mm and the required experimental liquid being tens of milliliters), which can be problematic when only a limited amount of liquid is available (blood or some physiological fluid samples are typically only a few tens of microliters); and (4) the difficulty in cleaning the capillary. These challenges made the development of the capillary measurement technology difficult. Therefore, there is an urgent need to develop new technologies and new ideas to address the challenges encountered in the capillary measurement process.

Moreover, it has been acknowledged that other viscosity measurement methods may have their own limitations. For example, for the falling ball method, it is difficult to measure the ball's falling velocity precisely, which causes measurement uncertainty; the vibration methods use optic fiber to detect the amplitude, which is expensive and requires complex optical alignment; and the rotation method requires a large apparatus and is not portable.

In particular, current viscosity measurement methods often require a minimum sample size of around milliliters for accurate measurement and can be relatively expensive. Although the viscosity sensing technology based on microfluidic greatly reduces the sample volume, it still requires more than 20µL to control the steady flow rate or the sample wetting channel, which can increase the error and reduce the reuse rate. Therefore, it is urgent to develop a low-cost, miniaturized and portable viscometer.

Yang Hongying et al. "Viscosity Sensors Based on III-Nitride Optical Devices Integrated With Droplet Sliding Channels" IEEE Electron Device Letters, vol. 43, no. 12 (2022-10-14) discusses a miniature viscosity sensor based on a GaN-on-sapphire optical device integrated with an inclined flow channel. The monolithic device, consisting of a pair of GaN diodes responsible for light emission and detection, can monitor droplet sliding. Without the need for external optical components, the proposed design of a few centimeters in size is capable of distinguishing the liquid viscosities from 2 to 600 mPa·s in tens of seconds. The proposed optical sensor exhibits attractive features, such as compactness, low cost, ease of operation, and small liquid volume required, making it suitable for practical applications in liquid viscosity measurement.

US 2023/003644 A1 discusses a system and method for monitoring local refractive index changes using a single ultracompact light emitting diode chip serving as refractometer. The single ultra-compact LED chip comprises LEDs and photodetectors.

Nguyen Thanh-Vinh et al. "Viscosity measurement based on the tapping-induced free vibration of sessile droplets using MEMS-based piezoelectric cantilevers", Lab On A Chip, vol. 15, no. 18 (2015-07-27) discusses a compact monolithically-integrated GaN-based droplet microsensor.

LU GAOFEI ET AL: "Droplet Microsensors Based on GaN Diode Optopairs", 2022 ASIA COMMUNICATIONS AND PHOTONICS CONFERENCE (ACP), IEEE (2022-11-05), pages 1970-1973, discloses the fabrication of a compact GaN-based droplet microsensor. The monolithic integration design of GaN diode optopairs provides the sensor with attractive properties such as miniaturization, robustness, low cost, and suitability for mass production. The sliding of water droplets across the device results in significant photocurrent changes, and the microsensor can respond to water droplet frequencies up to 3 Hz. The microsensor exhibits lightweight, low-cost, and rapid response, and has a high potential for tracking droplets in practical applications.

### Summary of the Invention

The object of this invention is to provide a viscometer comprising a miniaturized, portable opto chip, and detection methods for physical parameters. This viscometer and detection method can accurately detect physical parameters, such as viscosity, refractive index, and resonant frequency of liquid samples as small as 10 µL of or less.

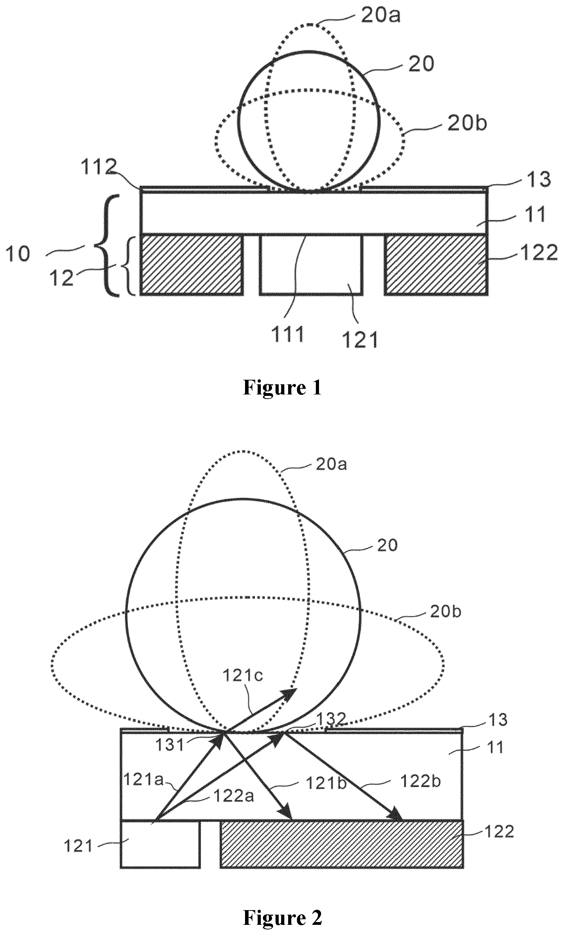

The inventors complete the present invention based on the idea of detecting a physical parameter, such as viscosity, refractive index and resonant frequency, of a very small amount such as 10 µL of or less liquid sample by recording the changes in photocurrent detected on the physical model shown in Figures 1 and 2.

In a first aspect, the present invention provides a viscometer according to claim 1.

As used herein, the term "monolithically integrated" means that the light emitting and light detecting components of the opto chip are processed as a single unit, with no additional wiring or alignment between the light emitting and light detecting components. The term "resonant frequency" refers to the resonant frequency of a liquid, that is, the vibration frequency at which a droplet of the liquid reaches its maximum amplitude.

In use, the opto chip of the claimed viscometer is placed on a vibrator which is configured to apply a vertical vibration to it. When the vibrator applies a pulse, the droplet on the opto chip begins to vibrate freely, causing a periodic change in the contact area between the droplet and the opto chip, resulting in a periodic change in the intensity of the reflected light received by the light-detecting region, and in turn causing a change in the photocurrent output from the light-detecting region. When the vibrator stops applying the pulse, the vibration amplitude of the droplet immediately attenuates at a certain rate. The attenuation rate is found to be related to the viscosity of the liquid and the physical parameters of the droplet, such as viscosity, refractive index and resonance frequency, can be calculated by recording the attenuation rate of the photocurrent as the vibration amplitude is attenuated. In general, the higher the viscosity of the droplet, the higher the attenuation rate.

In some embodiments of the present invention, the light-emitting region is constituted of a solid light source, such as a light-emitting diode (LED), a laser diode (LD), a surface-emitting laser (VCSEL), etc., preferably a low-cost LED. The light-detecting region is constituted of a light sensor or a light detector, such as a photodiode (PD), a phototransistor, etc..

In a preferred embodiment of the present invention, the substrate layer is formed of a light-transmissive material with high-refractive index, such as sapphire or silicon carbide.

In a preferred embodiment of the present invention, the light-emitting region and the light-detecting region are formed by epitaxial growth on the substrate layer. For example, in some embodiments, the substrate layer is sapphire, and the light-emitting region and the light-detecting region are LEDs epitaxially grown simultaneously on the sapphire substrate layer. After growth, the two regions are formed by using photolithography and/or inductively coupled plasma etching. The LED in the light-emitting region emits light by supplying current from a power supply, and the LED in the light-detecting region, which acts as a PD, is used to detect the light emitted by the light-emitting region.

In some embodiments of the present invention, the opto chip of the claimed viscometer further comprises a support base plate disposed vertically below the functional layer and monolithically integrated with the substrate layer and the functional layer. Preferably, the supporting base plate can be made of one or more of a fiberglass plate, a aluminum base plate and a ceramic.

In a preferred embodiment of the present invention, the light-emitting region is configured to have a circular shape and is provided at the geometric center of the light-detecting region.

In some embodiments of the present invention, the size of the opto chip of the claimed viscometer in the horizontal direction can be (0.1mm-10cm) × (0.1mm-10cm). In order to further improve the portability and reduce the cost of the opto chip, the size of the opto chip in the horizontal direction can be set according to the volume of a droplet of the liquid sample. For example, when the volume of the droplet is 50 µl, the size of the opto chip in the horizontal direction can be (5-10mm) × (5-10mm). When the volume of the droplets is 5-10 µl, the size of the opto chip in the horizontal direction can be (0.5-2mm) × (0.5-2mm).

In some embodiments of the present invention, the size of the substrate layer and the functional layer of the opto chip of the claimed viscometer can be set to, for example, 100 µm-1 mm, preferably 100-500 µm in the thickness direction. In some embodiments of the present invention, the thickness of the support base plate can be 0.5-10 mm, preferably 0.5-1 mm. In some embodiments of the present invention, the longitudinal cross-sectional structure of the opto chip of the claimed viscometer is as shown in Figure 1, wherein the opto chip 10 includes a substrate layer 11, a hydrophobic layer 13 integrated on the upper surface 112 of the substrate layer, and a functional layer 12 integrated on the lower surface 111 of the substrate layer 11 and constituted of a light-emitting region 121 and a light-detecting region 122. In this embodiment, the light-emitting region 121 is configured to have a circular shape at the geometric center of the light-detecting region 122. A droplet 20 of the liquid sample is applied onto the upper surface 112 of the substrate layer 11 and is opposite to the light-emitting region 121 in the vertical direction. When a vertically vibrating pulse is applied to the opto chip 10, the shape of the droplet 20 changes periodically between its highest point form 20a and its lowest point form 20b.

Figure 2 is a schematic diagram of the optical mechanism of the opto chip 10. At a point where the droplet 20 is stationary, when a first emitted light 121a emitted from the light-emitting region 121 is incident on a first point 131 on the contact interface between the substrate layer 11 and the droplet 20, a first reflected light 121b and a first refracted light 121c are generated, wherein the first reflected light 121b is received by the light-detecting region 122; and when a second emitted light 122a emitted from the light-emitting region 121 is incident on a second point 132 on the contact interface between the substrate layer 11 and the air, total reflection occurs and a generated second reflected light 122b is received by the light-detecting region 122. At a point where the liquid droplet 20 periodically vibrates vertically, the second point 132 periodically appears in two optical states, namely: (i) the contact interface between the substrate layer 11 and the air; and (ii) the contact interface between the substrate layer 11 and the droplet 20. Since the refractive index of the droplet is greater than the refractive index of the air and closer to the refractive index of the substrate layer 11, the intensity of the second reflected light 122b generated at the second point 132 changes periodically.

In some embodiments of the invention, the vibrator may include a signal generator for applying pulse waves to the vibrator. The photocurrent signal processing module may include signal processing devices such as signal amplifiers and oscilloscopes.

In some embodiments of the present invention, the photocurrent signal processing module can also be configured to process the photocurrent signal output from the light-detecting region and calculate the refractive index and/or resonant frequency of the droplet.

In a second aspect, the present invention provides a method for detecting the viscosity of a liquid sample according to claim 9, the method comprising the steps of:
(1) providing a viscometer as described in the first aspect of the present invention;
(2) dropping the liquid sample onto a surface of the opto chip to form a droplet;
(3) applying a pulse wave to the vibrator to cause the droplet on the opto chip to vibrate vertically;
(4) acquiring the photocurrent signals output from the light-detecting region during the attenuation of the vibration amplitude of the droplet; and
(5) processing the photocurrent information and calculate the viscosity of the droplet by using the photocurrent signal processing module.

According to the method for detecting the viscosity of a liquid sample provided by the present invention, the volume of the droplet of the liquid sample can be 5 µl-1 ml, preferably 5-50 µl, and more preferably 5-10 µl.

According to the method for detecting the viscosity of a liquid sample provided by the present invention, the viscosity of the liquid sample can be 2 to 40 cp.

According to the method for detecting the viscosity of a liquid sample provided by the present invention, wherein in step (3), the frequency of the pulse wave applied to the vibrator can be 10-1000 mHz. The present invention uses a relatively slow frequency to prevent a second pulse wave from starting to vibrate before the droplet attenuation is complete. Preferably, the voltage amplitude of the pulse wave applied to the vibrator can be 0.1-10V. A higher voltage amplitude will cause the droplet to vibrate off the surface, while a lower amplitude will make the signal less noticeable. Preferably, the duty cycle of the pulse wave applied to the vibrator can be 0.01%-1%.

In a third aspect, the present invention provides a method for detecting the refractive index of a liquid sample according to claim 13, the method comprising the steps of:
(1) providing a viscometer as described in the first aspect of the present invention;
(2) dropping the liquid sample onto a surface of the opto chip to form a droplet;
(3) applying a pulse wave to the vibrator to cause the droplet on the opto chip to vibrate vertically;
(4) acquiring the photocurrent signals output from the light-detecting region during the attenuation of the vibration amplitude of the droplet; and
(5) analyzing the acquired photocurrent signals, and calculating the refractive index of the liquid sample from the photocurrent intensity according to Snell's law.

Hereinafter, the principle of the refractive index detection method of the present invention will be described with reference to Figure 2. Figure 2 is a schematic diagram of the optical mechanism of the opto chip 10. At a point where the droplet 20 is stationary, when a first emitted light 121a emitted from the light-emitting region 121 is incident on the first point 131 at the edge of the droplet 20 (the optical state at the first point 131 is the contact interface between the substrate layer 11 and the air), a first reflected light 121b and a first refracted light 121c are generated, wherein the first reflected light 121b is received by a light-detecting region 122. Changes in the refractive index of the droplet 20 cause a corresponding change in the intensity of the first emitted light 121b, resulting in a different photocurrent signal. According to Snell's law, the refractive index of the droplet can be calculated based on the photocurrent intensity. This means that the refractive index of an unknown droplet can be calculated from the measured photocurrent values of x amps for the sapphire/air interface and y amps for the sapphire/droplet interface, in combination with the known refractive indices of sapphire and air.

In a fourth aspect, the present invention provides a method for detecting the resonant frequency of a liquid sample according to claim 14, the method comprising the steps of:
(1) providing a viscometer as described in the first aspect of the present invention;
(2) dropping the liquid sample to a surface of the opto chip to form a droplet;
(3) applying a pulse wave to the vibrator causing the droplet on the opto chip to vibrate vertically;
(4) acquiring the photocurrent signals output from the light-detecting region during the attenuation of the vibration amplitude of the droplet; and
(5) subjecting the acquired photocurrent signals to fast Fourier transform to obtain the resonant frequency of the droplets.

According to the method for detecting the resonant frequency of a liquid sample provided by the present invention, after performing Fourier transform on the droplet oscillation signals, it will be found that the droplet oscillations are concentrated at a certain frequency, which is its resonant frequency.

The viscometer and detection methods provided by the present invention utilize a monolithic integrated opto chip and eliminate the need for complex external optical calibration, making the viscometer easier to operate and reducing the overall size of the device. In addition, the chip-scale viscometer provided by the present invention has a larger detection range.

### Brief Description of the Drawings

The embodiments of the present invention and of components used therein are described in detail with reference to the accompanying drawings, wherein:
Figure 1 is a schematic diagram of the longitudinal cross-sectional structure of the opto chip used in the present invention;
Figure 2 is a schematic diagram of the optical mechanism in the opto chip used in the present invention;
Figure 3 is a photo of the opto chip prepared in Example 1 ;
Figure 4 is a schematic diagram of the detection system of the present invention constructed in Example 2;
Figure 5 are snapshots of the high-speed camera showing the vibration motion of the droplet at (1) the highest point, (2) the normal point and (3) the lowest point in Example 3 ;
Figure 6 is a time domain diagram of the photocurrent signals acquired in Example 3 ;
Figure 7 is a spectrum diagram obtained by subjecting the time domain photocurrent signal shown in Figure 6 to Fourier transforming as described in in Example 3 ;
Figure 8 is a data plot summarising the viscosity, refractive index and resonance frequency measured using liquid samples of different viscosities; and
Figure 9 is a schematic diagram of the process steps of the chip manufacturing process used in Example 1.

### Best Mode for Carrying Out the Invention

The present invention will be described in further detail below in conjunction with specific embodiments. The examples given are only for illustrating the present invention, but are not intended to limit the scope of the present invention , which is defined in claims 1, 9, 13 and 14.

### Example 1

### Manufacture of opto chips

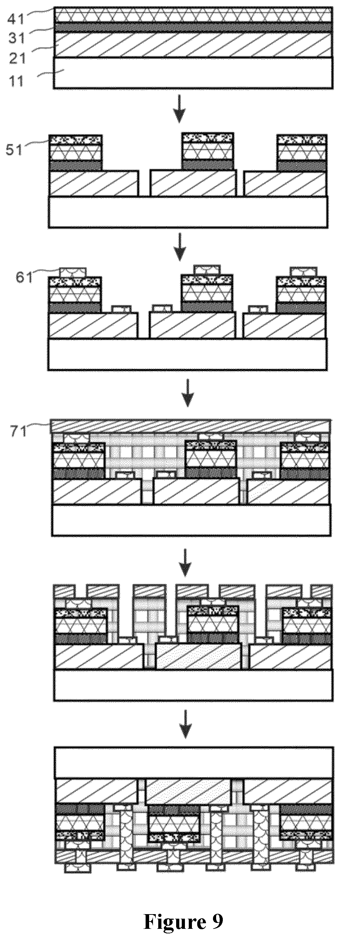

Referring to the detailed steps as shown in Figure 9, the optoelectronic chips are manufactured through wafer-level micro-nano processing technology as described below:(1) an undoped gallium nitride and N-type gallium nitride layer 21, a quantum well layer 31 and a P-type gallium nitride layer 41 were sequentially deposited on a substrate layer 11 by chemical vapor deposition of metal organic compound;
(2) a light-emitting region and a light-detecting region were formed by photolithography and inductively coupled plasma etching, and then a layer of tin-doped indium oxide 51 was deposited;
(3) an electrode layer 61was deposited by electron beam evaporation;
(4) a Bragg emitting layer 71 was formed by chemical vapor deposition ;
(5) the electrode layer was exposed by photolithography and inductive plasma etching; and
(6) the electrode layer material was continued to be deposited by electron beam evaporation until the electrodes protruded from the outer layer.

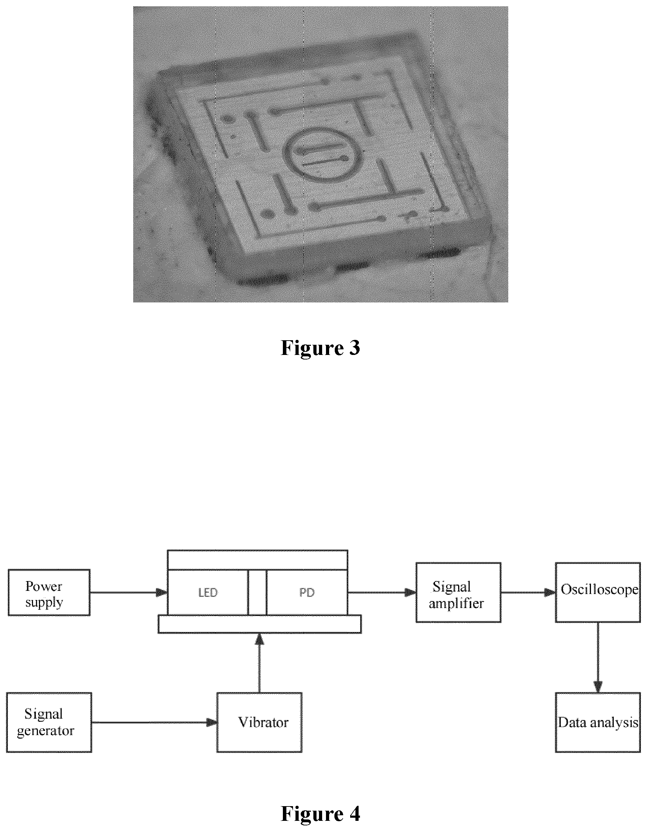

A photograph of the opto chip producedin this example is as shown in Figure 3, and its plane size is 1×1mm.

### Example 2

### Construction of the detection system

A detection system of the present invention was constructed as shown in Figure 4.

The opto chip made in Example 1 was supplied with current a power supply to make the LED emit light steadily. The vibrator was given a pulse wave by a signal generator. The vibrator vibrated at a given frequency, causing the optoelectronic chip on the vibrator together with the droplet on the optoelectronic chip to vibrate. The light emitted from the LED was detected by the PD, and the received photocurrent signals were amplified by a signal amplifier and then acquired by an oscilloscope. Finally, the acquired signals were analysed by a computer to obtain the relevant properties of the droplet.

### Example 3

### Detection of viscosity, refractive index and resonance frequency

(1) standard solutions of different viscosities were prepared using glycerol and pure water at 25°C: 1cp, 2cp, 4cp, 6.2cp, 7.9cp, 9.8cp, 12cp, 14.2cp, 16cp, 17.8cp, 20cp, 25cp, 30cp and 35.4cp;
(2) the detection system constructed in Example 2 was connected, and the power supply was set to 10mA constant current;
(3) 6µl standard solution was aspirated by a microsampler;
(4) the liquid was dropped onto the center of the opto chip;
(5) the vibrator was given a pulse wave with a voltage amplitude of 1V, a frequency of 0.1Hz and a duty cycle of 0.1%;
(6) oscilloscope signals were acquired, and the data was processed to obtain the relevant properties of the liquid; and
(7) steps (3)-(6) were repeated until all the data to be detected had been obtained.

### Characterization and Analysis

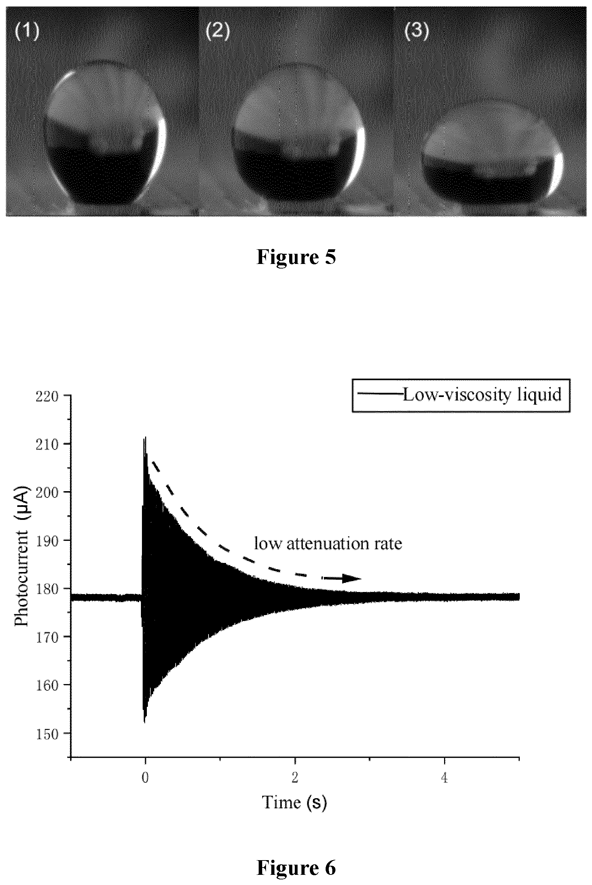

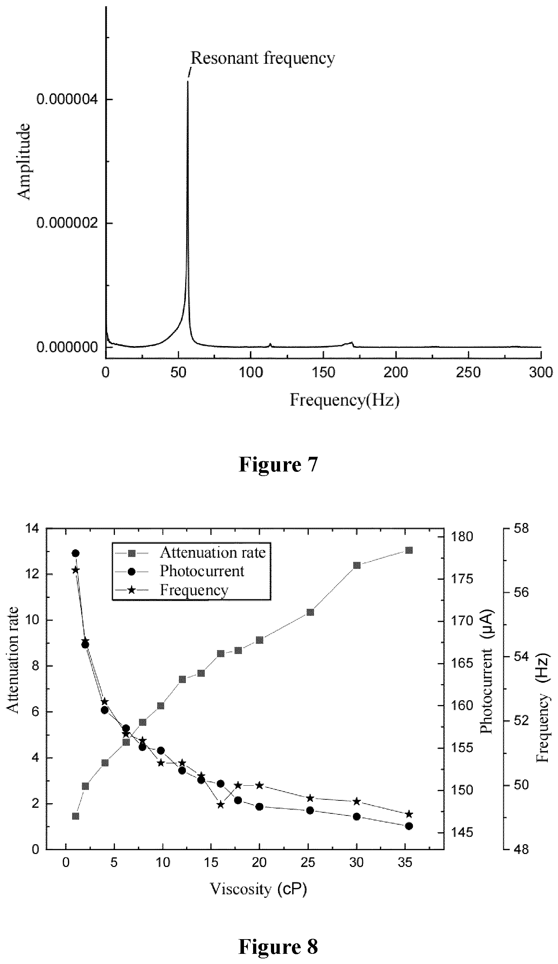

For the detection process of Example 3, the following actions were performed.
(1) For a liquid sample with a viscosity of 2cp, during the droplet vibration process in step (5) of Example 3, a high-speed camera was used to take photographs of the droplet, as shown in Figure 5, where: (1) the highest point; (2) the normal point; and (3) the lowest point.
(2) The time domain diagram of the acquired photocurrent signals was plotted as shown in Figure 6.
(3) The acquired photocurrent signals were subjected to Fourier transform (FFT transform) as shown in Figure 7. There is a peak around 52Hz, which is the resonant frequency of the droplet.
(4) The data of viscosity, refractive index and resonance frequency measured using liquid samples of different viscosities were summarized in Figure 8. It can be seen from Figure 8 that as the glycerol concentration increases, the viscosity and refractive index gradually increase, resulting in a gradual decrease in the first resonance frequency and photocurrent, but a gradual increase in the attenuation rate.

The examples provided above are only preferred embodiments of the present invention, and do not impose any limitation on the present invention, which is defined in the appended claims.

## Claims

1. A viscometer for detecting a physical parameter of a liquid sample, comprising: an opto chip (10) comprising an optical structure monolithically integrated with a substrate layer (11) and a functional layer (12), wherein:
the substrate layer (11) is light-transmissive, and is configured to have an upper surface (112) for receiving droplets (20) of the liquid sample and a lower surface (111) bonded to the functional layer (12);
the functional layer (12) is configured to comprise a light-emitting region (121) and a light-detecting region (122) with the light-emitting region (121) being configured to emit measurement light from an upper surface of the functional layer (12), and the light-detecting region (122) being configured to receive reflected light derived from the measurement light, wherein a signal of the change in intensity of the reflected light is converted into a photocurrent signal;
the viscometer further comprising:
a vibrator for providing vertical vibration to the opto chip (10),
a photocurrent signal processing module, which is configured to process the photocurrent signals output from the light-detecting region (122) and calculate one or more of viscosity, refractive index and resonant frequency of a droplet, based on an attenuation rate of a vibration amplitude of the droplets of the sample liquid.

2. The viscometer according to claim 1, wherein the opto chip (10) further comprises a support base plate disposed vertically below the functional layer (12) and monolithically integrated with the substrate layer (11) and the functional layer (12).

3. The viscometer according to claim 1 or 2, wherein the light-emitting region (121) is constituted of a light-emitting diode, a laser diode or a surface-emitting laser; and the light-detecting region (122) is constituted of a photodiode or a phototransistor; and/or
wherein the substrate layer is formed of sapphire or silicon carbide.

4. The viscometer according to any one of claims 1 to 3, wherein the light emitting region (121) and the light-detecting region (122) are formed by epitaxial growth on the substrate layer (11).

5. The viscometer according to any one of claims 1 to 4, wherein the substrate layer (11) is sapphire, and the light-emitting region (121) and the light-detecting region are LEDs epitaxially grown on the sapphire substrate layer (11).

6. The viscometer according to claim 4 or 5, wherein the light-emitting region (121) and the light-detecting region (122) are LEDs epitaxially grown simultaneously on the sapphire substrate layer (11), and processed into two regions by photolithography and/or inductively coupled plasma etching.

7. The viscometer according to claim 1, wherein the vibrator comprises a signal generator for applying pulse waves to the vibrator.

8. A method for detecting the viscosity of a liquid sample, comprising the steps of:
(1) providing a viscometer according claim 1 or 7, wherein the physical parameter includes the viscosity ;
(2) dropping the liquid sample to a surface of the opto chip (10) to form a droplet;
(3) applying pulse waves to the vibrator to cause the droplet on the opto chip (10) to vibrate vertically;
(4) acquiring the photocurrent signals output from the light-detecting region (122) during the attenuation of the vibration amplitude of the droplet; and
(5) processing the acquired photocurrent signals and calculating the viscosity of the droplet by using the photocurrent signal processing module.

9. The method for detecting the viscosity of a liquid sample according to claim 8, wherein the volume of the droplet of the liquid sample is 5 µl-1 ml, preferably 5-50 µl, and more preferably 5-10 µl.

10. The method for detecting the viscosity of a liquid sample according to claim 8, wherein the viscosity of the liquid sample ranges from 2 to 40 cp.

11. The method for detecting the viscosity of a liquid sample according to any one of claims 8 to 10, wherein in step (3), the frequency of the pulse waves applied to the vibrator is 10-1000 mHz; preferably, the voltage amplitude of the pulse waves applied to the vibrator is 0.1-10V; and preferably, the duty cycle of the pulse waves applied to the vibrator is 0.01%-1%.

12. A method for detecting the refractive index of a liquid sample, comprising the steps of:
(1) providing a viscometer according to claim 1 or 7, wherein the physical parameter includes the refractive index ;
(2) dropping the liquid sample to a surface of the opto chip (10) to form a droplet;
(3) applying pulse waves to the vibrator to cause the droplet on the opto chip (10) to vibrate vertically;
(4) acquiring the photocurrent signals output from the light-detecting region (122) during the attenuation of the vibration amplitude of the droplet; and
(5) analyzing the acquired photocurrent signals, and calculating the refractive index of the liquid sample from the photocurrent intensity according to Snell's law.

13. A method for detecting the resonant frequency of a liquid sample, comprising the steps of:
(1) providing a viscometer according to claim 1 or 7, wherein the physical parameter includes the resonant frequency ;
(2) dropping the liquid sample to a surface of the opto chip (10) to form a droplet;
(3) applying pulse waves to the vibrator causing the droplet on the opto chip (10) to vibrate vertically;
(4) acquiring the photocurrent signals output from the light-detecting region (122) during the attenuation of the vibration amplitude of the droplet; and
(5) subjecting the acquired photocurrent signals to fast Fourier transform to obtain the resonant frequency of the droplets.

## Patentansprüche

1. Viskosimeter zum Detektieren eines physikalischen Parameters einer flüssigen Probe, umfassend: einen Optochip (10), umfassend eine optische Struktur, die monolithisch mit einer Substratschicht (11) und einer Funktionsschicht (12) integriert ist, wobei:
die Substratschicht (11) lichtdurchlässig ist und dazu konfiguriert ist, eine obere Oberfläche (112) zum Empfangen von Tröpfchen (20) der flüssigen Probe und eine untere Oberfläche (111), die an die Funktionsschicht (12) gebunden ist, aufzuweisen;
die Funktionsschicht (12) dazu konfiguriert ist, eine lichtemittierende Region (121) und eine lichtdetektierende Region (122) zu umfassen, wobei die lichtemittierende Region (121) dazu konfiguriert ist, Messlicht von einer oberen Oberfläche der Funktionsschicht (12) zu emittieren, und die lichtdetektierende Region (122) dazu konfiguriert ist, reflektiertes Licht zu empfangen, das von dem Messlicht stammt, wobei ein Signal der Änderung der Intensität des reflektierten Lichts in ein Photostromsignal umgewandelt wird;
wobei das Viskosimeter ferner Folgendes umfasst:
einen Vibrator zum Bereitstellen von vertikaler Vibration für den Optochip (10),
ein Photostromsignalverarbeitungsmodul, das dazu konfiguriert ist, die Photostromsignale, die von der lichtdetektierenden Region (122) ausgegeben werden, zu verarbeiten und eines oder mehrere von Viskosität, Brechungsindex und Resonanzfrequenz eines Tröpfchens basierend auf einer Dämpfungsrate einer Vibrationsamplitude der Tröpfchen der Probenflüssigkeit zu berechnen.

2. Viskosimeter nach Anspruch 1, wobei der Optochip (10) ferner eine Stützbasisplatte umfasst, die vertikal unter der Funktionsschicht (12) angeordnet und monolithisch mit der Substratschicht (11) und der Funktionsschicht (12) integriert ist.

3. Viskosimeter nach Anspruch 1 oder 2, wobei die lichtemittierende Region (121) aus einer lichtemittierenden Diode, einer Laserdiode oder einem oberflächenemittierenden Laser besteht; und die lichtdetektierende Region (122) aus einer Photodiode oder einem Phototransistor besteht; und/oder
wobei die Substratschicht aus Saphir oder Siliziumkarbid gebildet ist.

4. Viskosimeter nach einem der Ansprüche 1 bis 3, wobei die lichtemittierende Region (121) und die lichtdetektierende Region (122) durch epitaktisches Wachstum auf der Substratschicht (11) gebildet sind.

5. Viskosimeter nach einem der Ansprüche 1 bis 4, wobei die Substratschicht (11) Saphir ist und die lichtemittierende Region (121) und die lichtdetektierende Region LEDs sind, die auf der Saphirsubstratschicht (11) epitaktisch gewachsen sind.

6. Viskosimeter nach Anspruch 4 oder 5, wobei die lichtemittierende Region (121) und die lichtdetektierende Region (122) LEDs sind, die gleichzeitig auf der Saphirsubstratschicht (11) epitaktisch gewachsen und in zwei Regionen durch Photolithographie und/oder induktiv gekoppeltes Plasmaätzen verarbeitet sind.

7. Viskosimeter nach Anspruch 1, wobei der Vibrator einen Signalgenerator zum Anlegen von Impulswellen an den Vibrator umfasst.

8. Verfahren zum Detektieren der Viskosität einer flüssigen Probe, umfassend die folgenden Schritte:
(1) Bereitstellen eines Viskosimeters nach Anspruch 1 oder 7, wobei der physikalische Parameter die Viskosität beinhaltet;
(2) Tropfen der flüssigen Probe auf eine Oberfläche des Optochips (10), um ein Tröpfchen zu bilden;
(3) Anlegen von Impulswellen an den Vibrator, um zu bewirken, dass das Tröpfchen auf dem Optochip (10) vertikal vibriert;
(4) Erfassen der Photostromsignale, die von der lichtdetektierenden Region (122) ausgegeben werden, während der Dämpfung der Vibrationsamplitude des Tröpfchens; und
(5) Verarbeiten der erfassten Photostromsignale und Berechnen der Viskosität des Tröpfchens durch Verwenden des Photostromsignalverarbeitungsmoduls.

9. Verfahren zum Detektieren der Viskosität einer flüssigen Probe nach Anspruch 8, wobei das Volumen des Tröpfchens der flüssigen Probe 5 µl-1 ml, bevorzugt 5-50 µl und bevorzugter 5-10 µl ist.

10. Verfahren zum Detektieren der Viskosität einer flüssigen Probe nach Anspruch 8, wobei die Viskosität der flüssigen Probe von 2 bis 40 cp reicht.

11. Verfahren zum Detektieren der Viskosität einer flüssigen Probe nach einem der Ansprüche 8 bis 10, wobei in Schritt (3) die Frequenz der Impulswellen, die an den Vibrator angelegt werden, 10-1000 mHz ist; bevorzugt die Spannungsamplitude der Impulswellen, die an den Vibrator angelegt werden, 0,1-10 V ist; und bevorzugt der Tastzyklus der Impulswellen, die an den Vibrator angelegt werden, 0,01 %-1 % ist.

12. Verfahren zum Detektieren des Brechungsindex einer flüssigen Probe, umfassend die folgenden Schritte:
(1) Bereitstellen eines Viskosimeters nach Anspruch 1 oder 7, wobei der physikalische Parameter den Brechungsindex beinhaltet;
(2) Tropfen der flüssigen Probe auf eine Oberfläche des Optochips (10), um ein Tröpfchen zu bilden;
(3) Anlegen von Impulswellen an den Vibrator, um zu bewirken, dass das Tröpfchen auf dem Optochip (10) vertikal vibriert;
(4) Erfassen der Photostromsignale, die von der lichtdetektierenden Region (122) ausgegeben werden, während der Dämpfung der Vibrationsamplitude des Tröpfchens; und
(5) Analysieren der erfassten Photostromsignale und Berechnen des Brechungsindex der flüssigen Probe aus der Photostromintensität nach dem Snellschen Gesetz.

13. Verfahren zum Detektieren der Resonanzfrequenz einer flüssigen Probe, umfassend die folgenden Schritte:
(1) Bereitstellen eines Viskosimeters nach Anspruch 1 oder 7, wobei der physikalische Parameter die Resonanzfrequenz beinhaltet;
(2) Tropfen der flüssigen Probe auf eine Oberfläche des Optochips (10), um ein Tröpfchen zu bilden;
(3) Anlegen von Impulswellen an den Vibrator, wodurch bewirkt wird, dass das Tröpfchen auf dem Optochip (10) vertikal vibriert;
(4) Erfassen der Photostromsignale, die von der lichtdetektierenden Region (122) ausgegeben werden, während der Dämpfung der Vibrationsamplitude des Tröpfchens; und
(5) Unterziehen der erfassten Photostromsignale schneller Fourier-Transformation, um die Resonanzfrequenz der Tröpfchen zu erhalten.

## Revendications

1. Viscosimètre pour détecter un paramètre physique d'un échantillon liquide, comprenant : une puce optique (10) comprenant une structure optique intégrée de manière monolithique avec une couche de substrat (11) et une couche fonctionnelle (12), dans lequel :
la couche de substrat (11) transmet la lumière, et est conçue pour présenter une surface supérieure (112) pour recevoir des gouttelettes (20) de l'échantillon liquide et une surface inférieure (111) liée à la couche fonctionnelle (12) ;
la couche fonctionnelle (12) est conçue pour comprendre une région d'émission de lumière (121) et une région de détection de lumière (122), la région d'émission de lumière (121) étant conçue pour émettre de la lumière de mesure à partir d'une surface supérieure de la couche fonctionnelle (12), et la région de détection de lumière (122) étant conçue pour recevoir de la lumière réfléchie dérivée de la lumière de mesure, dans lequel un signal du changement d'intensité de la lumière réfléchie est converti en un signal de photocourant ;
le viscosimètre comprenant en outre :
un vibrateur pour fournir une vibration verticale à la puce optique (10),
un module de traitement de signal de photocourant, qui est configuré pour traiter les signaux de photocourant délivré en sortie par la région de détection de lumière (122) et calculer un ou plusieurs éléments parmi une viscosité, un indice de réfraction et une fréquence de résonance d'une gouttelette, sur la base d'un taux d'atténuation d'une amplitude de vibration des gouttelettes du liquide d'échantillon.

2. Viscosimètre selon la revendication 1, dans lequel la puce optique (10) comprend en outre une plaque de base de support disposée verticalement sous la couche fonctionnelle (12) et intégrée de manière monolithique avec la couche de substrat (11) et la couche fonctionnelle (12).

3. Viscosimètre selon la revendication 1 ou 2, dans lequel la région d'émission de lumière (121) est constituée d'une diode d'émission de lumière, d'une diode laser ou d'un laser à émission par la surface ; et la région de détection de lumière (122) est constituée d'une photodiode ou d'un phototransistor ; et/ou
dans lequel la couche de substrat est formée de saphir ou de carbure de silicium.

4. Viscosimètre selon l'une quelconque des revendications 1 à 3, dans lequel la région d'émission de lumière (121) et la région de détection de lumière (122) sont formées par culture en épitaxie sur la couche de substrat (11).

5. Viscosimètre selon l'une quelconque des revendications 1 à 4, dans lequel la couche de substrat (11) est en saphir, et la région d'émission de lumière (121) et la région de détection de lumière sont des LED cultivées en épitaxie sur la couche de substrat en saphir (11).

6. Viscosimètre selon la revendication 4 ou 5, dans lequel la région d'émission de lumière (121) et la région de détection de lumière (122) sont des LED cultivées en épitaxie simultanément sur la couche de substrat de saphir (11), et traitées en deux régions par photolithographie et/ou gravure par plasma à couplage inductif.

7. Viscosimètre selon la revendication 1, dans lequel le vibrateur comprend un générateur de signal pour appliquer des ondes pulsées au vibrateur.

8. Procédé pour détecter la viscosité d'un échantillon liquide, comprenant les étapes de :
(1) fourniture d'un viscosimètre selon la revendication 1 ou 7, dans lequel le paramètre physique comprend la viscosité ;
(2) fait de faire goutter l'échantillon liquide sur une surface de la puce optique (10) pour former une gouttelette ;
(3) application d'ondes pulsées au vibrateur pour amener la gouttelette sur la puce optique (10) à vibrer verticalement ;
(4) acquisition des signaux de photocourant délivrés en sortie par la région de détection de lumière (122) pendant l'atténuation de l'amplitude de vibration de la gouttelette ; et
(5) traitement des signaux de photocourant acquis et calcul de la viscosité de la gouttelette en utilisant le module de traitement de signal de photocourant.

9. Procédé pour détecter la viscosité d'un échantillon liquide selon la revendication 8,
dans lequel le volume de la gouttelette de l'échantillon liquide est de 5 µl à 1 ml, de préférence de 5 à 50 µl, et idéalement de 5 à 10 µl.

10. Procédé pour détecter la viscosité d'un échantillon liquide selon la revendication 8, dans lequel la viscosité de l'échantillon liquide se situe dans une plage de 2 à 40 cp.

11. Procédé pour détecter la viscosité d'un échantillon liquide selon l'une quelconque des revendications 8 à 10, dans lequel, à l'étape (3), la fréquence des ondes pulsées appliquées au vibrateur est de 10 à 1 000 mHz ; de préférence, l'amplitude de tension des ondes pulsées appliquées au vibrateur est de 0,1 à 10 V ; et de préférence, le rapport cyclique des ondes pulsées appliquées au vibrateur est de 0,01 % à 1 %.

12. Procédé pour détecter l'indice de réfraction d'un échantillon liquide, comprenant les étapes de :
(1) fourniture d'un viscosimètre selon la revendication 1 ou 7, dans lequel le paramètre physique comprend l'indice de réfraction ;
(2) fait de faire goutter l'échantillon liquide sur une surface de la puce optique (10) pour former une gouttelette ;
(3) application d'ondes pulsées au vibrateur pour amener la gouttelette sur la puce optique (10) à vibrer verticalement ;
(4) acquisition des signaux de photocourant délivrés en sortie par la région de détection de lumière (122) pendant l'atténuation de l'amplitude de vibration de la gouttelette ; et
(5) analyse des signaux de photocourant acquis, et calcul de l'indice de réfraction de l'échantillon liquide à partir de l'intensité du photocourant selon la loi de Snell.

13. Procédé pour détecter la fréquence de résonance d'un échantillon liquide, comprenant les étapes de :
(1) fourniture d'un viscosimètre selon la revendication 1 ou 7, dans lequel le paramètre physique comprend la fréquence de résonance ;
(2) fait de faire goutter l'échantillon liquide sur une surface de la puce optique (10) pour former une gouttelette ;
(3) application d'ondes pulsées au vibrateur amenant la gouttelette sur la puce optique (10) à vibrer verticalement ;
(4) acquisition des signaux de photocourant délivrés en sortie par la région de détection de lumière (122) pendant l'atténuation de l'amplitude de vibration de la gouttelette ; et
(5) soumission des signaux de photocourant acquis à une transformée de Fourier rapide pour obtenir la fréquence de résonance des gouttelettes.
